# EUROPEAN PATENT SPECIFICATION

(11) **EP 0 620 236 B1**
(45) Date of publication and mention of the grant of the patent: **28.01.1998**
(21) Application number: 94870067.9
(22) Date of filing: 15.04.1994
(51) Int. Cl.: C08F 279/02, C08L 51/04

(54) **Process for producing high impact polystyrene**
Verfahren zur Herstellung von schlagzähem Polystyrol
Procédé de préparation de polystyrène choc

(30) Priority: 15.04.1993 US 48632; 30.04.1993 US 56323
(43) Date of publication of application: 19.10.1994
(73) Proprietor: FINA TECHNOLOGY, INC., Dallas, Texas 75206 (US)
(72) Inventor: Kim, Sehyun, Houston, TX 77062 (US); Daumerie, Michel, Houston, TX 77062 (US); Blackmon, Kenneth P., Houston, TX 77062 (US); Sosa, Jose M., Deer Park, TX 77536 (US)
(74) Representative: Leyder, Francis

(56) References cited:
- EP-A- 0 460 541
- WO-A-85/02192
- DE-A- 2 620 579
- US-A- 4 277 574

## Description

### FIELD OF THE INVENTION

The present invention relates to processes to obtain a highly useful product exhibiting increased gloss and impact resistance.

### BACKGROUND OF THE INVENTION

It is well-known that rubber reinforced polymers of monovinylaromatic compounds, such as styrene, alphamethyl styrene, and ring-substituted styrenes are desirable for a variety of uses. More particularly, rubber-reinforced polymers of styrene having included therein discrete particles of a cross-linked rubber, for example, polybutadiene, the discrete particles of rubber being dispersed throughout the styrene polymer matrix, can be used in a variety of applications including refrigerator linings, furniture, household appliances, and toys. The conventional term for such rubber-reinforced polymers is "High Impact Polystyrene" or "HIPS".

The physical characteristics and mechanical properties of HIPS are dependent upon many factors, including the particle size of the cross-linked rubber particles. One of the most important characteristics of HIPS materials is the ability of such materials to exhibit a high surface gloss which is aesthetically appealing while also maintaining a high impact strength in order to be desirable for use in articles such as furniture and appliances.

It has been known that properties of HIPS such as impact and gloss are strongly affected by rubber particle size and distribution at a given rubber concentration. Unfortunately, these two main properties counteract each other and the result is that the larger rubber particle utilized to obtain strength and impact detracts from the appearance and gloss of the final material. It has been known since the late 1970's that a small number of large rubber particles when combined with a large number of small rubber particles and blended into a HIPS material synergistically achieve a HIPS with high impact and high gloss. The phrase commonly associated with utilizing a combination of large and small rubber particles is "Bimodal Particle Size Distribution" (BPSD) HIPS.

BPSD HIPS is normally prepared by one of three known methods. The first such method is melt-blending, the second is "parallel polymerization", and the third is "split feed polymerization".

In melt-blending, two HIPS materials of different particle size distributions are blended together in an extruder or a mixer.

In parallel polymerization, two independently polymerized mixtures, one of which has small rubber particles and the other of which has large rubber particles are combined prior to final polymerization in a third polymerization reactor after phase inversion (particle formation), and then the combined mixture undergoes final polymerization.

"Split feed polymerization" involves the process wherein approximately 70 to 95% of the feed solution is polymerized past the point of phase inversion, and then the remainder of the feed solution is added to the reactor preventing phase reinversion. The rubber particles in the second feed are immediately formed upon addition and dispersed, resulting in much larger particles than the initial rubber particles. The large rubber particles have a unique morphology wherein a large number of tiny occlusions and a relatively thick rubber membrane are formed.

One of the earliest patents recognizing the advantage of bimodal particle size distribution rubber HIPS was that granted to Lanza, U.S. Patent No. 4,153,645 dated 1979 which discloses an improved balance of properties obtained from melt blends comprising 65 to 85% HIPS, having small rubber particles (approximately 0.6 µm) and about 15 to 35% HIPS having large rubber particles (2-5 µm) which were prepared by means of mass-suspension polymerization. Lanza stressed that the selection of the proper ratio of HIPS materials, followed by dilution with crystal polystyrene to obtain rubber level control, would provide an optimum balance of properties. The addition of 20% HIPS material having 5 µm rubber particles to a HIPS material having 0.6 µm rubber particles increased Izod impact strength from 1.8 up to 4.6 ft. lb./in.(96 to 246 J/m) when the total rubber concentration was 10.5%.

In 1980, the Lavengood patent, U.S. Patent No. 4,214,056 disclosed a method for preparing melt-blends exhibiting improved toughness and gloss, with a 70 to 95% HIPS material having 0.5 to 1 µm rubber particles and the remaining HIPS material having 2 to 3 µm rubber particles. The two HIPS materials were prepared in a multistage stirred reactor. When a 10% HIPS material of 2.5 µm rubber particle size was blended with 90% HIPS having 0.6 µm rubber particles, with a total rubber concentration of 7 to 8%, the Izod increased from 0.9 up to 1.8 ft.lb./in. (48 to 96 J/m) without degradation of gloss, which was measured at 96 according to ASTM 523 test method (60° angle).

Japanese Patent, JP 63,112,646 discloses a material having a good balance of strength, stiffness, toughness and uniform color obtained from utilizing a 75% HIPS material having rubber particles exhibiting a core-shell morphology and a particle size of 0.1 to 0.6 µm, combined with 25% HIPS having 0.7 to 2.0 µm rubber particles with a "salami" morphology, and 0.05% polydimethylsiloxane. This HIPS material achieved an Izod strength of 2.2 ft.lb./in. (117 J/m) compared to 0.7 ft.lb./in. (37 J/m) without the bimodal particle size distribution. The resulting material as in the previous two patented processes utilized melt-blending to achieve the final product.

Examples of "parallel polymerization" BPSD HIPS include the material taught by the Dupre patent, U.S. Patent No. 4,146,589, dated 1979.

In this patent, BPSD HIPS materials were manufactured in a continuous process by means of a CSTR (continuous stirred tank reactor) utilizing parallel polymerization.

A HIPS comprising 70 to 95% of 0.5 to 1.0 µm rubber particles and 5 to 30% of 2 to 3 µm rubber particles was manufactured by parallel polymerization and resultantly increased the Izod approximately 50% while maintaining a relatively high gloss. In one example, Izod and gloss of one material, which was 90% 0.7 µm rubber particles, and 10% 2.2 µm rubber particles were respectively 1.8 ft.lb./in. (96 J/m) and 95 with a total rubber concentration of 8 to 9%. A similar invention was disclosed by the Aerts, et al. patent, EP 0 412 801 A1, published in 1991, where BPSD HIPS was prepared in plug-flow reactors using linear flow stirred tower reactors and parallel polymerization. The patent claimed that this method achieved advantages in controlling rubber particle size, the degree of grafting, and the molecular weight of the resulting product compared to HIPS materials prepared by various other methods. HIPS material comprising 50 to 95% of 0.2 to 0.7 µm rubber particles and 5 to 50% of 1.5 to 5 µm rubber particles exhibited improved mechanical and gloss properties utilizing a rubber for the small particles, which was a block copolymer of styrene and butadiene (40/60). In one example, a HIPS material comprising 80% of 0.2 µm rubber particles and 20% of 3.7 µm rubber particles had an Izod value of 3.0 ft-lb/in (160 J/m) and a gloss of 91.

Another example of "parallel polymerization" HIPS material manufacture is found in the Echte patent, U.S. Patent No. 4,493,922, issued in 1985. This patent discloses HIPS compositions having 60 to 95% of 0.2 to 0.6 µm small particles and 5 to 40% of 2 to 8 µm large particles and claimed a balance of gloss and impact properties. The morphologies of the small and large particles were different and were respectively, capsule morphology and cell/coil morphology. The patent stated that this BPSD HIPS could be prepared also by blending (melt/solution) or by parallel polymerization.

Examples of "split feed polymerization" can be found in patents such as that issued to Mott, et al. in 1980 (U.S. Patent No. 4,221,883) which disclosed a method for producing a BPSD HIPS by means of using split feed polymerization, where the second feed was added to the polymerizing first feed when the percent solids was greater than 30. The patent claimed that polymers prepared by this method, when compared to others, were generally more uniform in tensile strength and further exhibited better flow characteristics during molding operations. The patent also claimed materials which possessed a good combination of gloss and tensile and elongation.

The Dupre patent, U.S. Patent No. 4,334,039 issued in 1982 disclosed a process for preparing BPSD HIPS which allegedly showed an unexpected increase in toughness without degradation of gloss or flow properties. The Dupre process disclosed a first feed solution polymerized up to 10 to 40% conversion and a second feed solution added to the reactor simultaneously with the pre-polymerized first feed solution. The resulting products contained 70 to 95% of 0.5 to 1.0 µm rubber particles and 5 to 30% of 2 to 5 µm rubber particles. The patent also claimed that small rubber particles formed in the process have a longer residence time which reportedly increased the percent grafting and toughness.

The Damen, et al. European patent, EP 0 096 447 A2, published in 1983, purported to disclose a BPSD HIPS which was manufactured by adding the second feed solution which was either a fresh solution or a partially polymerized but non-inverted solution, to the pre-polymerized first feed, wherein small particles were dispersed. The patent alleged that the process resulted in a BPSD HIPS having 70 to 95% rubber particles of 0.5 to 1.5 µm and 5 to 30% rubber particles of 4 to 10 µm, where the percent graft of small particles was at least 130 and the resulting material exhibited a balance of properties such as gloss, elongation and impact strength. The patent specifically claimed a gloss of at least 80, an elongation of at least 30, and an impact strength in J/m of at least 14 times the percent butadiene in the rubber.

The Japanese patent, JP 336617, dated 1989, purportedly describes a BPSD HIPS material having 65 to 95% of 0.1 to 0.5 µm rubber particles and 5 to 35% of 0.5 to 2.0 µm rubber particles.

The Burk patent, U.S. Patent No. 4,254,236, claims to disclose a modified "split-feed polymerization" process wherein large rubber particles were prepared in a second feed solution by dissolving polystyrene to induce phase inversion. The second feed solution containing preformed large rubber particles was fed into the pre-polymerized first feed solution when the first feed solution was at 15 to 50% conversion level. It was alleged in the Burk patent that the size of the large particles could be more easily controlled because the size of the second rubber particles could be increased by increasing the concentration of the dissolved polystyrene in the second feed solution. HIPS material prepared by this method containing 50 to 95% of 0.5 to 1.5 µm rubber particles and 5 to 50% of 2 to 10 µm rubber particles allegedly provided a balance of impact strength and gloss properties.

### SUMMARY OF THE INVENTION

The present invention provides a process that is unique and may be utilized to manufacture a bimodal rubber particle size distribution HIPS material which more easily controls the parameters of the material such as gloss and impact strength and does so much more efficiently than those known processes described in the aforementioned prior art. In particular, the processes as described in claims 1-11 are provided. The process of the present invention is achieved by the utilization of a unique method of introducing rubber particles into the polystyrene material. This process is categorized as "pellet-feed solution polymerization". In pellet-feed solution polymerization, a small amount of HIPS having a large particle component is dissolved in styrene along with a rubber, which will give smaller rubber particles than those of the dissolved HIPS. Then the solution is polymerized via a normal polymerization process. The principle of this polymerization is that the cross-linked rubber particles in the pellet-feed do not lose their size by reinversion, but maintain their size throughout their flow through the reactors. As a result, the HIPS material formed will have a bimodal particle size distribution. This rubber reinforced polystyrene material demonstrates a high gloss and high impact strength that can be more closely controlled than the complicated systems of the three aforementioned blending processes.

Also, the economics of the present system are considerably more beneficial than those of the prior three systems and the resulting material exhibits properties equal to or better than those materials disclosed in the aforementioned prior art.

### DESCRIPTION OF THE PREFERRED EMBODIMENT

Table I below represents test runs of BPSD HIPS manufactured according to a heretofore unused method of making such products which method is referred to herein as the "pellet feeding process" or "pellet solution polymerization". Rather than using one of the conventional bimodal particle size HIPS manufacturing processes, such as melt-blending, "parallel polymerization", or "split feed polymerization", the present embodiment introduces a unique process whereby existing pellets of HIPS material having a single range of particle sizes is introduced into a styrene feed solution which contains a rubber material which will yield a different particle size range than that of the HIPS pellets. The HIPS pellets used, preferably having the large particle size producing rubber components, are dissolved in styrene monomer along with a small particle size producing rubber. This feed solution is then polymerized via commercial polymerization methods.

The principle involved in this unique process is believed to be based upon the apparent fact that the cross-linked rubber particles in the HIPS pellets are not reinverted when the pellets are dissolved in the styrene monomer prior to polymerization. Therefore, these rubber particles maintain their original size and may even increase in size to some extent, perhaps as a result of additional grafting and cross-linking, during the polymerization process. This, when combined with the smaller rubber particles obtained from the rubber dissolved in the monomer feed, achieves a desirable bimodal distribution.

**TABLE I**

| | | Izod | | Gardner | Gloss 60° |
|---|---|---|---|---|---|
| | | (ftlb/in) | (J/m) | | |
| HIPS | A' + 2% HIPS B | | | | |
| 1. | melt blending | 0.9 | 48 | 4 | 96 |
| 2. | pellet feed | 1.2 | 64 | 29 | 96 |
| | | | | | |
| HIPS | A' + 5% HIPS B | 1.2 | 64 | 63 | 94 |
| 1. | melt blending | | | | |
| 2. | pellet feed | 1.3 | 69 | 70 | 94 |
| | | | | | |
| HIPS | B' + 2% HIPS C | | | | |
| 1. | melt blending | 1.6 | 85 | 95 | 90 |
| 2. | pellet feed | 1.7 | 91 | 118 | 92 |
| | | | | | |
| HIPS | B' + 3% HIPS C | | | | |
| 1. | melt blending | 2.3 | 123 | 106 | 90 |
| 2. | pellet feed | 2.0 | 107 | 121 | 91 |
| | | | | | |
| HIPS | C' + 2% HIPS D' + 3% HIPS F' | | | | |
| 1. | dry blend | 1.2 | 64 | 87 | 90 |
| 2. | pellet feed | 1.7 | 91 | 151 | 92 |
| | | | | | |
| HIPS | E' + 4% HIPS C | | | | |
| 1. | dry blend | 2.4 | 128 | 112 | 91 |
| 2. | pellet feed | 2.8 | 149 | 140 | 91 |
| HIPS A': Contains 10.5% rubber (0.5 µm) HIPS B': Contains 12% rubber (0.5 µm) HIPS C': Contains 14% rubber (0.4 µm) HIPS D': Contains (2µm) HIPS E': Contains 14% rubber HIPS F': 4 µm HIPS material | | | | | |

In Table I above, various combinations of HIPS components were utilized to manufacture BPSD HIPS samples using first a conventional blending process (sample #1), and then using the same components in a "pellet feed solution polymerization" process (sample #2). From this table it is evident that the Pellet Feeding Process generally provides improved Izod impact, Gardner impact, and gloss (60°) over conventional HIPS blending techniques such as melt-blending. In every sample except the fourth, every property was equal to or better in the pellet feeding process than in the melt-blending process. In the fourth sample, Gardner impact and gloss was improved in the pellet feeding sample but Izod impact was reduced.

Thus the "pellet feed solution polymerization" process of manufacturing BPSD HIPS materials is preferable to conventional processes, providing improved qualities in the finished HIPS material. In addition, this embodiment of the invention provides further advantages:
(1) No additional capital investment is required to shift from single particle size HIPS to bimodal particle size HIPS, whereas the conventional bimodal processes all require costly additional equipment to manufacture BPSD HIPS;
(2) By being able to closely control the amount of pellets added into the polymerization system, the manufacturer has the ability to maintain very exact control of the rubber particle size distribution, since the content of particles in the pellet portion of the feed stays constant; and,
(3) Transition materials or selected off-grade HIPS materials may be used to supply the large particle component, thereby further reducing costs.

A unique and easily controlled process of making a BPSD HIPS material is taught which utilizes existing HIPS pellets, which are added with a rubber to styrene monomer prior to or during polymerization resulting in superior high impact polystyrene.

Although a specific preferred embodiment of the present invention has been described in the detailed description above, the description is not intended to limit the invention to the particular forms of embodiments disclosed therein since they are to be recognized as illustrative rather than restrictive and it will be obvious to those skilled in the art that the invention is not so limited.

## Claims

1. A process for manufacturing a high-gloss, high impact polystyrene material having a multi-modal rubber particle size distribution, said method comprising :
- preparing a polymerization feed solution of styrene monomer and a rubber in solution, said rubber yielding a predetermined first particle size;
- selecting a high impact polystyrene material having a rubber component with a second particle size different from said first rubber particle size;
- dissolving said high impact polystyrene material in said feed solution; and,
- polymerizing said feed solution into a bimodal particle size distribution high impact polystyrene.

2. The process of Claim 1, wherein said first rubber particle size is between 0.1 and 1.0 µm.

3. The process of Claim 1, wherein said second rubber particle size is between 3 and 15 µm.

4. The process of Claim 1, wherein said first rubber particle size is 0.1 to 1.0 µm and said second rubber particle size is 3 to 15 µm.

5. The process of Claim 1, wherein said polystyrene material is a pelletized high impact polystyrene and said polymerization feed solution comprises rubber dissolved in styrene monomer.

6. The process of Claim 3, wherein said polystyrene material is a pelletized high impact polystyrene and said feed solution is rubber dissolved in styrene monomer.

7. A method of controlling the rubber particle size distributions of a multi-modal high impact polystyrene material, said method comprising :
- preparing a feed solution comprising a first particle size yielding rubber dissolved in styrene monomer;
- dissolving in said feed solution a first supply of high impact polystyrene material containing a second rubber particle size;
- dissolving in said feed solution at least one additional supply of high impact polystyrene material having at least one additional size of rubber particle, different from said first and second rubber particle sizes; and,
- polymerizing said feed solution and dissolved polystyrene materials into multi-modal rubber particle size high impact polystyrene.

8. The method of Claim 7, wherein said first particle size yielding rubber has a particle size of 0.1 to 1.0 µm and said at least one additional size of rubber particle is 3 to 15 µm.

9. A method of controlling the rubber particle size distributions of a multi-modal high impact polystyrene material during the manufacture thereof, said method comprising :
- dissolving in a styrene monomer feed solution a single particle size yielding rubber material;
- dissolving in said feed solution at least one high impact polystyrene material containing rubber particles of different size than said single particle size yielding rubber; and,
- polymerizing said feed solution into multi-modal high impact polystyrene.

10. The method of Claim 9, wherein said single particle size yielding rubber is of a small particle size, and said at least one high impact polystyrene material comprises a polystyrene having a large rubber particle.

11. The method of Claim 9, wherein said single particle size yielding rubber is of a small particle size, and said at least one high impact polystyrene material comprises a first polystyrene having a large rubber particle and a second polystyrene having a medium size rubber particle between the small particle size and the large particle size.

## Patentansprüche

1. Verfahren zur Herstellung eines hochglänzenden, hochschlagfesten Polystyrolmaterials mit einer multimodalen Kautschukteilchengrößenverteilung, wobei das Verfahren umfaßt:
- Herstellen einer Polymerisationszufuhrlösung aus einem Styrolmonomer und einem Kautschuk in Lösung, wobei der Kautschuk eine vorgegebene erste Teilchengröße liefert;
- Auswählen eines hochschlagfesten Polystyrolmaterials mit einer Kautschukkomponente, die eine zweite Teilchengröße aufweist, die von der ersten Kautschukteilchengröße verschieden ist;
- Auflösen des hochschlagfesten Polystyrolmaterials in der Zufuhrlösung; und
- Polymerisieren der Zufuhrlösung zu einem hochschlagfesten Polystyrol mit bimodaler Teilchengrößenverteilung.

2. Verfahren nach Anspruch 1, worin die erste Kautschukteilchengröße zwischen 0,1 und 1,0 µm liegt.

3. Verfahren nach Anspruch 1, worin die zweite Kautschukteilchengröße zwischen 3 und 15 µm liegt.

4. Verfahren nach Anspruch 1, worin die erste Kautschukteilchengröße 0,1 bis 1,0 µm und die zweite Kautschukteilchengröße 3 bis 15 µm beträgt.

5. Verfahren nach Anspruch 1, worin das Polystyrolmaterial ein pelletisiertes, hochschlagfestes Polystyrol ist, und worin die Polymerisationszufuhrlösung in Styrolmonomer gelösten Kautschuk umfaßt.

6. Verfahren nach Anspruch 3, worin das Polystyrolmaterial ein pelletisiertes, hochschlagfestes Polystyrol ist und die Zufuhrlösung in Styrolmonomer gelöster Kautschuk ist.

7. Verfahren zur Steuerung der Kautschukteilchengrößenverteilung eines multimodalen, hochschlagfesten Polystyrolmaterials, wobei das Verfahren umfaßt:
- Herstellen einer Zufuhrlösung, die in Styrolmonomer gelösten Kautschuk umfaßt, der eine erste Teilchengröße liefert;
- Auflösen eines ersten Zulaufs von hochschlagfestem Polystyrolmaterial, das eine zweite Kautschukteilchengröße enthält, in der Zufuhrlösung;
- Auflösen von mindestens einem weiteren Zulauf von hochschlagfestem Polystyrolmaterial, das mindestens eine weitere Kautschukteilchengröße aufweist, die von der ersten und zweiten Kautschukteilchengröße verschieden ist, in der Zufuhrlösung, und
- Polymerisieren der Zufuhrlösung und der gelösten Polystyrolmaterialien zu hochschlagfestem Polystyrol mit multimodaler Kautschukteilchengröße.

8. Verfahren nach Anspruch 7, worin der Kautschuk, der die erste Teilchengröße liefert, eine Teilchengröße von 0,1 bis 1,0 µm aufweist, und die mindestens eine weitere Kautschukteilchengröße 3 bis 15 µm beträgt.

9. Verfahren zur Steuerung der Kautschukteilchengrößenverteilung eines multimodalen, hochschlagfesten Polystyrolmateriais während seiner Herstellung, wobei das Verfahren umfaßt:
- Auflösen eines Kautschukmaterials, welches eine einzige Teilchengröße liefert, in einer Zufuhrlösung aus Styrolmonomer;
- Auflösen von mindestens einem hochschlagfesten Polystyrolmaterial, das Kautschukteilchen in einer Größe enthält, die von der des ersten Kautschuks, der eine einzige Teilchengröße liefert, verschieden ist, in der Zufuhrlösung; und
- Polymerisieren der Zufuhrlösung zu einem multimodalen, hochschlagfesten Polystyrol.

10. Verfahren nach Anspruch 9, worin der Kautschuk, der die erste Teilchengröße liefert, eine kleine Teilchengröße aufweist und wobei das mindestens eine hochschlagfeste Polystyrolmaterial ein Polystyrol mit großen Kautschukteilchen umfaßt.

11. Verfahren nach Anspruch 9, worin der Kautschuk, der eine einzige Teilchengröße liefert, eine kleine Teilchengröße aufweist, und das mindestens eine hochschlagfeste Polystyrolmaterial ein erstes Polystyrol mit großen Kautschukteilchen und ein zweites Polystyrol mit einer mittleren Kautschukteilchengröße, die zwischen der kleinen Teilchengröße und der großen Teilchengröße liegt, umfaßt.

## Revendications

1. Procédé pour préparer une matière de polystyrène à brillant élevé et à résistance élevée aux chocs, possédant une distribution granulométrique de caoutchouc multimodale, ledit procédé comprenant le fait de:
- préparer une solution d'alimentation de polymérisation de monomère de styrène et un caoutchouc en solution, ledit caoutchouc fournissant une première granulométrie prédéterminée;
- sélectionner une matière de polystyrène à résistance élevée aux chocs, possédant un composant de caoutchouc muni d'une seconde granulométrie différente de ladite première - granulométrie de caoutchouc;
- dissoudre ladite matière de polystyrène à résistance élevée aux chocs dans ladite solution d'alimentation; et
- polymériser ladite solution d'alimentation pour obtenir un polystyrène à résistance élevée aux chocs possédant une distribution granulométrique bimodale.

2. Procédé selon la revendication 1, dans lequel ladite première granulométrie de caoutchouc se situe entre 0,1 et 1,0 µm.

3. Procédé selon la revendication 1, dans lequel ladite seconde granulométrie de caoutchouc se situe entre 3 et 15 µm.

4. Procédé selon la revendication 1, dans lequel ladite première granulométrie de caoutchouc s'élève de 0,1 à 1,0 µm et ladite seconde granulométrie de caoutchouc s'élève de 3 à 15 µm.

5. Procédé selon la revendication 1, dans lequel ladite matière de polystyrène est un polystyrène à résistance élevée aux chocs transformé en boulettes et ladite solution d'alimentation de polymérisation comprend du caoutchouc dissous dans un monomère de styrène.

6. Procédé selon la revendication 3, dans lequel ladite matière de polystyrène est du polystyrène à résistance élevée aux chocs transformé en boulettes et ladite solution d'alimentation est du caoutchouc dissous dans un monomère de styrène.

7. Procédé de réglage des distributions granulométriques de caoutchouc d'une matière de polystyrène multimodale à résistance élevée aux chocs, ledit procédé comprenant le fait de:
- préparer une solution d'alimentation comprenant un caoutchouc procurant une première granulométrie, dissous dans un monomère de styrène;
- dissoudre dans ladite solution d'alimentation, une première charge d'une matière de polystyrène à résistance élevée aux chocs, contenant une seconde granulométrie de caoutchouc;
- dissoudre dans ladite solution d'alimentation, au moins une charge supplémentaire d'une matière de polystyrène à résistance élevée aux chocs, possédant au moins une granulométrie de caoutchouc supplémentaire différente desdites première et seconde granulométries de caoutchouc; et
- polymériser ladite solution d'alimentation et lesdites matières de polystyrène dissoutes pour obtenir un polystyrène à résistance élevée aux chocs, possédant une granulométrie de caoutchouc multimodale.

8. Procédé selon la revendication 7, dans lequel ledit caoutchouc procurant une première granulométrie possède une granulométrie de 0,1 à 1,0 µm et la ou lesdites granulométries supplémentaires de caoutchouc s'élèvent de 3 à 15 µm.

9. Procédé de réglage des distributions granulométriques de caoutchouc d'une matière de polystyrène multimodale à résistance élevée aux chocs, au cours de la préparation de cette dernière, ledit procédé comprenant le fait de:
- dissoudre dans une solution d'alimentation de monomère de styrène, une matière de caoutchouc procurant une granulométrie unique;
- dissoudre dans ladite solution d'alimentation, au moins une matière de polystyrène à résistance élevée aux chocs dont les granulométries de caoutchouc sont différentes de celles dudit caoutchouc procurant une granulométrie unique; et
- polymériser ladite solution d'alimentation pour obtenir un polystyrène multimodal à résistance élevée aux chocs.

10. Procédé selon la revendication 9, dans lequel ledit caoutchouc procurant une granulométrie unique possède de petites particules et la ou lesdites matières de polystyrène à résistance élevée aux chocs comprennent un polystyrène possédant de grosses particules de caoutchouc.

11. Procédé selon la revendication 9, dans lequel ledit caoutchouc procurant une granulométrie unique possède de petites particules et la ou lesdites matières de polystyrène à résistance élevée aux chocs comprennent un premier polystyrène possédant de grosses particules de caoutchouc et un second polystyrène possédant des particules moyennes de caoutchouc entre les petites particules et les grosses particules.
